# EUROPÄISCHE PATENTSCHRIFT

(11) **EP 1 759 447 B1**
(45) Veröffentlichungstag und Bekanntmachung des Hinweises auf die Patenterteilung: **10.07.2013**
(21) Anmeldenummer: 05715837.0
(22) Anmeldetag: 08.03.2005
(51) Int. Cl.: H02K 16/04, H02K 1/27

(54) **DREHFELDMASCHINE MIT GLOCKENLÄUFER**
ROTATING FIELD MACHINE WITH BELL-SHAPED ROTOR
MACHINE A CHAMP TOURNANT POURVUE D'INDUITS EN CLOCHE

(30) Priorität: 23.06.2004 DE 102004030063
(43) Veröffentlichungstag der Anmeldung: 07.03.2007
(73) Patentinhaber: Leiber, Thomas, 81925 München (DE); Leiber, Heinz, 71739 Oberriexingen (DE)
(72) Erfinder: Leiber, Thomas, 81925 München (DE); Leiber, Heinz, 71739 Oberriexingen (DE)
(74) Vertreter: Lenzing Gerber Stute
(86) Internationale Anmeldenummer: PCT/EP2005/002441
(87) Internationale Veröffentlichungsnummer: WO 2006/000260

(56) Entgegenhaltungen:
- DE-A1- 3 609 351
- DE-A1- 4 345 316
- DE-A1- 19 753 916
- DE-A1- 19 856 647
- FR-A- 2 708 802
- US-A- 4 626 752
- PATENT ABSTRACTS OF JAPAN Bd. 009, Nr. 280 (E-356), 8. November 1985 (1985-11-08) -& JP 60 121948 A (NIPPON DENSO KK), 29. Juni 1985 (1985-06-29)
- PATENT ABSTRACTS OF JAPAN Bd. 009, Nr. 234 (E-344), 20. September 1985 (1985-09-20) -& JP 60 087647 A (SANYO DENKI KK; others: 01), 17. Mai 1985 (1985-05-17)

## Beschreibung

Die vorliegende Erfindung betrifft ein Elektrische Drehfeldmaschine nach dem Oberbegriff des Anspruch 1.

Gattungsgemäße Drehfeldmaschinen werden auch als Glockenläufer bezeichnet. Sie weisen in der Regel einen feststehenden Innen- und Außenstator und einen drehbar gelagerten Rotor auf, wobei letzterer durch eine Glocke gebildet ist. In der Glocke können Permanentmagnetelemente für eine magnetische Vorspannung angeordnet sein.

Die Anforderungen an die Regelbarkeit und die Dynamik von Elektromotoren steigen stetig. Ein entscheidendes Kriterium der Eigenschaften von Elektromotoren ist deshalb das Trägheitsmoment des Rotors bzw. der Quotient aus erzeugtem Drehmoment und Trägheitsmoment des Rotors. Besonders gute Eigenschaften in dieser Hinsicht weisen die Glockenläufer auf, bei denen jedoch aufgrund der einseitigen Drehmomentübertragung das Drehmoment beschränkt ist, da sich der Rotor mit zunehmendem Drehmoment unzulässig stark verwindet. Außerdem weisen Glockenläufer Probleme bei der Wärmeabfuhr auf, so dass auch dadurch die zulässige Leistungsaufnahme beschränkt ist, was insbesondere gilt, wenn die Glocke aus Kunststoff oder einer Wicklung besteht. In dem Aufsatz von W.-R. Canders, H. Mosebach, F. Laube "Technologien und Grenzen von High Torque Antrieben", S. 17ff, ist ein Glockenläufer mit einem mit Permanentmagneten versehenen Rotor beschrieben. Der Rotor ist dabei stirnseitig am Gehäuse sowie an der Welle gelagert. Die Permanentmagnete sind im Rotor zwischen Außen- und Innenstator angeordnet, wobei sowohl der Außen- als auch der Innenstator jeweils Erregerwicklungen trägt. Bei den beschriebenen Antrieben handelt es sich um langsam drehende Antriebe mit hohem Drehmoment, wobei der Rotor zum Grossen Teil aus Weicheisen besteht, woraus ein hohes Trägheitsmoment resultiert. Auf S. 19 des Aufsatzes ist ein Rotor mit nur einer Reihe von Permanentmagneten dargestellt, wobei offen bleibt, wie die Permanentmagnete im Rotor gelagert sind. Bei dieser Ausführungsform bilden Außen- und Innenstator gemeinsam mit den Permanentmagneten des Rotors gemeinsame Magnetkreise.

Eine günstige und sichere Lagerung der Permanentmagnetelemente ist aus dem vorbeschriebenen Aufsatz nicht bekannt. Insbesondere für schnell drehende Drehfeldmaschinen ist die Lagerung der Permanentmagnetelemente gem. des Artikels von W.-R. Canders nicht geeignet.

Aus der DE 3609351 A1 ist ein als Synchronmotor ausgebildeter Servomotor bekannt, dessen Rotor aus einem dünnen, nicht magnetischen Stützrohr gebildet ist, auf dem radial außenliegend Dauer-Magnetsegmente aufgeklebt sind. Die an den Dauermagnetsegmenten angreifenden Fliehkräfte werden von einer die Dauermagnetsegmente überziehenden vorgespannten Bandage aus GFK oder nicht magnetischem Edelstahl aufgefangen. Bei diesem Servomotor sind auf beiden Seiten des Rotors Statoren mit entsprechenden Statorwicklungen vorgesehen. Diese Bauweise ist aufwendig, benötigt radial viel Platz und ist nicht kostengünstig.

Aus der FR 2 708 802 A ist zwar bereits ein Rotor bekannt, bei dem radial innenliegend an der weichmagnetischen zylindrischen Wandung Magnetelemente angebracht sind.

Aus der DE 198 56 647 A1 ist ein elektrischer Hochmomentmotor bekannt, bei dem zu beiden Seiten des weichmagnetischen Rotors Statoren angeordnet sind, wobei auf beiden Seiten des Rotors Magnetelemente angebracht sind. Diese Anordnung beansprucht radial viel Platz und gewährleistet keine sichere der Magnetelemente. Eine diesbezüglich gleichartige Anordnung zeigt auch die DE 197 53 916 A1.

Der Erfindung liegt daher die Aufgabe zugrunde, eine elektrische Drehfeldmaschine mit geringer Trägheitsmasse für hohe Drehzahlen und großem Drehmoment zu schaffen, bei der die Permanentmagnetelemente sicher angebracht sind und die überdies kostengünstig ist und wenig Bauraum beansprucht.

Diese Aufgabe wird erfinderisch durch einen elektrischen Antrieb mit den Merkmalen des Anspruch 1 gelöst. Weitere vorteilhafte Ausgestaltungen dieses Antriebs ergeben sich durch die Merkmale der Unteransprüche.

Der Erfindung liegt der Gedanke zugrunde, dass ein Glockenläufer mit einem kleinen Trägheitsmoment benötigt wird, sofern der Antrieb für hohe Drehzahlen mit hoher Dynamik ausgelegt werden soll. Ein kleines Trägheitsmoment bei gleichzeitig hohem Drehmoment und hoher Sicherheit, sowie Schutz bei einer eventuellen Zerstörung der Permanentmagnetelemente wird vorteilhaft dadurch erzielt, dass die Permanentmagnetelemente zumindest innen an einer zylindrischen Wandung eines topfförmigen Teils anliegen. Die Permanentmagnet-elemente sind dabei vorteilhaft nur in einer Schicht angeordnet, wobei die zylindrische Wandung erfindungsgemäß aus einem magnetischen Werkstoff und dünnwandig ausgestaltet ist. Im Gegensatz zu den bekannten Glockenläufern ist es ein wesentliches Merkmal des erfindungsgemäßen Antriebs, dass die magnetischen Flüsse der gebildeten Magnetkreise die Permanentmagnetelemente sowie die zylindrische Wandung radial vollständig durchtreten, dass heißt, dass der Außen - und Innenstator zusammen mit dem Rotor mindestens einen gemeinsamen magnetischen Kreis bildet. Ein magnetischer Rückschluss über den Rotor erfolgt nicht oder ist vernachlässigbar.

Eine besonders gute Kapselung bei gleichzeitig leichter Montage kann dadurch erzielt werden, wenn die Permanentmagnetelemente zwischen zwei koaxial ineinander liegenden zylindrischen Wandungen einliegen. Die zylindrischen Wandungen sind dabei entweder Teile zweier koaxial ineinander liegenden Töpfe, deren zylindrischen Wandungen um die Dicke der Permanentmagnetelemente zueinander beabstandet sind. Es ist jedoch genauso gut möglich, dass die zylindrischen Wandungen an ein und derselben Bodenwandung angeformt und/oder befestigt sind. Mindestens eine Bodenwandung ist dabei mit der Welle zur Kraftübertragung zu verbinden. Eine bevorzugte Ausführungsform ergibt sich, wenn die Glocke durch einen Außentopf mit innen angeordneter Hülse gebildet ist, wobei zwischen der Hülse und dem Außentopf die Permanentmagnetelemente angeordnet sind. Die Hülse kann bei dieser Ausführungsform an der zylindrischen Wandung oder der Bodenwandung des Außentopfes z.B. mittels Schweißen verbunden werden.

Gemäß vorteilhaften Weiterbildungen der Erfindung ist ebenfalls vorgesehen, dass mehrere topfförmige Teile bzw. Glocken axial nebeneinander auf der Welle angeordnet sind und zusammen den Rotor bilden. Dabei können die bodenförmigen Wandungen zweier benachbart angeordneten Töpfe durch eine gemeinsame Bodenwandung gebildet sein. Es ist ebenso möglich, dass die zylindrische Wandung zweier benachbarter topfförmiger Teile durch eine gemeinsame Hülse gebildet ist, wobei dann die Kraftübertragung über eine gemeinsame oder durch zwei oder mehrere Bodenwandungen von der zylindrischen Wandung auf die Welle erfolgt.

Durch die Aufteilung der Magnete auf mehrere topfförmige Teile kann die benötigte Länge der Permanentmagnete vorteilhaft klein gehalten werden.

Es ist selbstverständlich ebenso möglich, mehrere Permanentmagnete in axialer Richtung nebeneinander in einem topfförmigen Teil anzuordnen. Gleiches gilt auch für die Anordnung von mehreren axial nebeneinander angeordneten topfförmigen Teilen, welche ebenfalls jeweils mehrere axial nebeneinander angeordnete Permanentmagnete aufweisen können. Auch kann die axiale Länge der axial nebeneinander angeordneten topfförmigen Teile unterschiedlich sein.

In Umfangsrichtung ist es besonders vorteilhaft, 2 Magnete an einer entsprechenden Ausgestaltung des Topfes, z.B. Sicken, abzustützen und den Zwischenraum durch ein Material mit großen Temperaturausdehnungskoeffizienten (z.B. Giesharz) auszufüllen, damit bei der Übertragung der Umfangskräfte eine Temperaturkompensation berücksichtigt. Dies ist erforderlich, da die Permanentmagnete einen sehr kleinen Ausdehnungskoeffizienten besitzen.

Die vorbeschriebenen topfförmigen Teile sind ähnlich den Glocken bekannter Glockenläufer ausgestaltet. Die zylindrische Wandung stützt sich radial jedoch nur über die Bodenwandung an der Welle ab. Vorzugsweise ist die zylindrische Wandung der Glocke aus magnetisch leitendem Material.

Der elektrische Antrieb kann sowohl als Innen- aber auch als Außenläufer ausgestaltet sein, wobei der Innenläufer dadurch gekennzeichnet ist, dass die Erregerspulen am Außenstator angeordnet sind. Der Außenläufer ist dadurch gekennzeichnet, dass die Erregerspulen ausschließlich am Innenstator angeordnet sind. Gleichwohl ist es möglich, dass sowohl am Außenals auch am Innenstator Erregerspulen vorgesehen sind.

Der Antrieb wird entweder als kontinuierlich drehender Motor, Schrittmotor oder Segmentmotor verwendet. Ebenso ist es möglich, den Antrieb auch als Linearantrieb zu verwenden. Beim Linearantrieb wird der Rotor nicht um seine Achse verdreht, sondern in axialer Richtung vom Magnetfeld hin und her verstellt.

Auch ist es möglich, dass die Spulen des Außenstators und die Permanentmagnete des Rotors wie bei einem Transversalflußmotor angeordnet sind. Ein derartiger Transversalflußmotor ist z.B. im "Handbuch Elektrische Kleinantriebe", Carl Hanser Verlag, beschrieben. Der Innenstator ist dabei entsprechend auszugestalten.

Nachfolgend werden verschiedene Ausgestaltungen des erfindungsgemäßen Antriebs anhand von Zeichnungen näher erläutert.

Es zeigen:
- Fig. 1:: Erfindungsgemäßer elektrischer Antrieb mit zwei Glocken als Innenläufer;
- Fig. 1a:: Detaildarstellung der Konstruktion der Glocken;
- Fig. 1b:: Querschnittsdarstellung durch eine Glocke;
- Fig. 1c:: Querschnittsdarstellung durch eine Glocke mit im Profil quaderförmigen Permanentmagnetelementen;
- Fig. 2:: erfindungsgemäßer Antrieb mit Erregerspulen am Außen sowie am Innenstator, wobei die Erregerspulen des Innenstators maßgeblich den magnetischen Fluss generieren;
- Fig. 3:: erfindungsgemäßer Antrieb mit Erregerspulen am Außen sowie am Innenstator, wobei die Erregerspulen des Außenstators maßgeblich den magnetischen Fluss generieren
- Fig. 4:: erfindungsgemäßer Antrieb als Außenläufer mit einwandiger Glocke;
- Fig. 5:: erfindungsgemäßer Antrieb mit radial beidseitig gekapselten Permanentmagnetelementen;
- Fig. 6:: Antrieb mit nur einer doppelwandigen Glocke;
- Fig. 7;: erfindungsgemäßer Antrieb als Segmentmotor;
- Fig. 8:: erfindungsgemäßer Antrieb als Linearmotor.

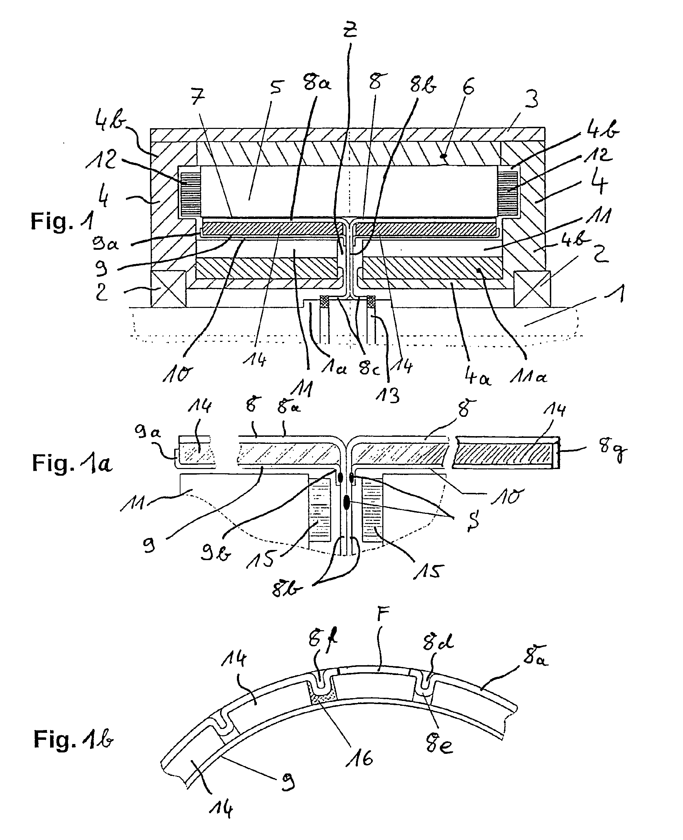

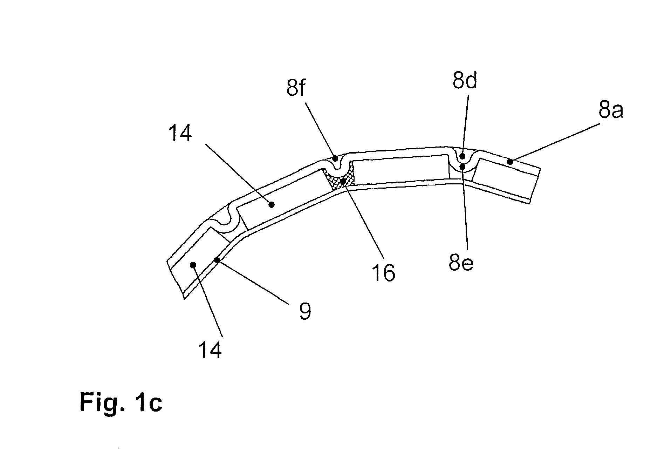

Fig. 1 zeigt einen Längsschnitt durch eine erste Ausführungsform eines erfindungsgemäßen Antriebs. Zur Übertragung des im Antrieb erzeugten Drehmoments ist eine Antriebswelle 1 vorgesehen, die mit zwei Wälzlagern 2 drehbar im Gehäuse des Antriebs gelagert ist. Das Gehäuse setzt sich aus den beiden Gehäusehälften 4 und dem Gehäusemantel 3 zusammen. Die Gehäusehälften 4 weisen zylindrische Wandungen 4a auf, die an den stirnseitigen Gehäusewänden 4b angeformt sind. Die zylindrischen Wandungen 4a tragen den Innenstator 11, 11a, welcher zweigeteilt ist und einen Zwischenraum Z in der Mitte bildet. Durch den Zwischenraum 2 greifen die Bodenwandungen 8b der topfförmigen Teile 8 hindurch und stützen sich mit ihrem nach außen gerichteten Kragen 8c z.B. formschlüssig an dem mittleren Bereich 1a der Welle 1 ab. In axialer Richtung sind die topfförmigen Teile 8 gegen axiales Verschieben mittels Sicherungsringen 13 gesichert, welche in Nuten des mittleren Bereichs 1a der Welle 1 formschlüssig einliegen. Die topfförmigen Elemente sind mit ihren scheibenförmigen Bodenwandungen 8b zueinander zugewandt, so dass die Innenstatoren 11, 11a, welche auf den zylindrischen Wandungen 4a der Gehäuseteile 4 angeordnet sind, in die Töpfe mit den daran angeordneten Permanentmagneten 14 axial einschiebbar sind.

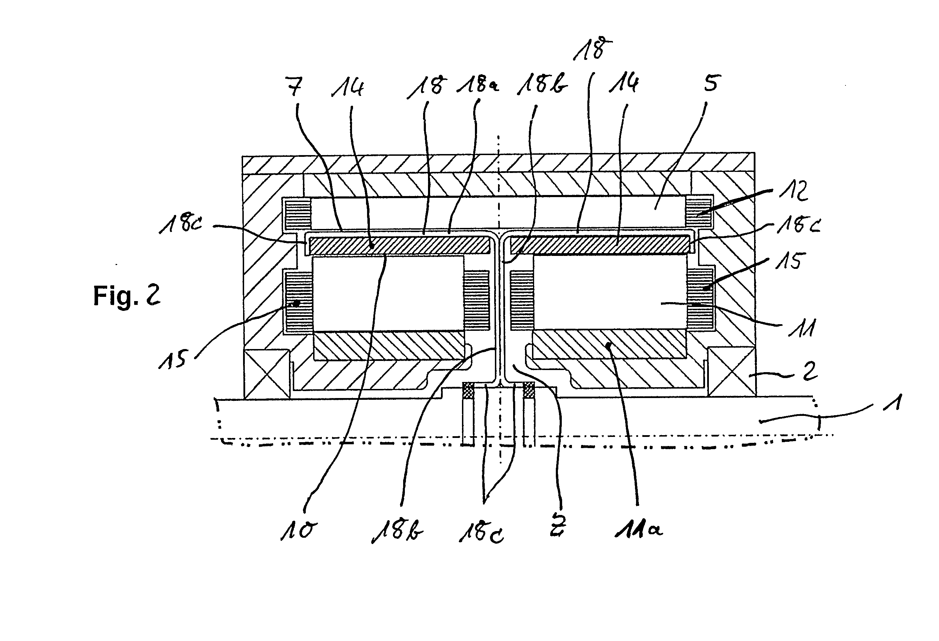

Jedes topfförmige Teil 8 hat eine radial außen an der Bodenwandung 8b angeformte zylindrische Wandung 8a, die zusammen mit der innen angeordneten Hülse 9 einen Raum für die Permanentmagnete 14 bilden. Der Zylinder 9 ist, wie aus Fig. 1a ersichtlich, mittels Schweißetellen S an der Bodenwandung 8b des topfförmigen Teils 8 befestigt. Hierzu weist der innere Zylinder 9 einen nach innen gerichteten Kragen 9b auf. Zusätzlich weist der innenliegende Zylinder 9 einen nach außen gerichteten Kragen 9 auf, welcher die Permanentmagnete 14 in axialer Richtung hält. Der Aufbau ist auch ohne Hülse 9 möglich (siehe Fig. 2)

Der in Fig. 1 dargestellte erfindungsgemäße Antrieb ist als sogenannter Innenläufer ausgebildet, das heißt, lediglich der Außenstator 5, 6 trägt Erregerspulen 12, Der Innenstator 11, 11a dient lediglich für den magnetischen Rückschluss. Die Pole der Außen- und Innenstatoren sind derart ausgebildet, dass sie zusammen mit den im topfförmigen Teil 8 befind-lichen Permanentmagneten 14 Magnetkreise bilden, die die zylindrischen Wandungen 8a und 9 vollständig durchdringen. Die Permanentmagnete 14 sorgen dabei für eine magnetische Vorspannung.

Durch die magnetische Leitfähigkeit wird der magnetische Widerstand vorwiegend durch die Luftspalte gebildet.

Die Fig. 1a zeigt lediglich Ausschnitte des Rotors, wobei der Innenstator 11 Erregerspulen 15 trägt. Der Außenstator ist in Fig. 1a nicht dargestellt. Das topfförmige Teil 8 sowie der innere Zylinder 9 können durch Schweißverbindungen S oder mittels Nieten oder Kleben miteinander verbunden sein. Die Magnete 14 sind durch die optional vorsehbare Hülse 9 in der Glocke gehalten. Die Hülse kann aus einem magnetisch nicht leitenden Material gebildet sein.

Ein dünnwandiges Teil als Glocke neigt insbesondere mit zusätzlichen Verformungen, wie sie in Fig. 1b und 1c. beschrieben sind zu Formabweichungen. Dies kann reduziert werden, dadurch dass bei der Magnetmontage die Glocke in die Bohrung einer Vorrichtung geschoben wird, welche die Sollkontur wiedergibt, Nach der Magnetmontage wird dann ein nichtmagnetischer Ring 8g eingedrückt und in Gießharz eingebettet oder stirnseitig verschweißt. Dieser Ring verhindert neben dem Gießharz eine größere Formab-weichung, wenn das Teil von der Vorrichtung entsprechend entfernt wird.

Die Fig. 1b zeigt einen Querschnitt durch ein Segment des Rotors. Die zylindrische Wandung 8a des äußeren Topfes weist Sicken bzw. Einkerbungen 8d auf, die sich in axialer Richtung erstrecken und zwischen denen die Permanentmagnetelemente 14 gelagert sind. Der Abstand der Einkerbungen 8d zueinander ist etwas größer als die Breite der Permanentmagnete 14, wobei der verbleibende Zwischenraum mit einem Material, z.B. Gießharz, gefüllt ist, welches die Ausdehnungsunterschiede der einzelnen Teile zueinander bei Temperaturschwankungen ausgleicht. Bekanntlich haben die Magnete quer zur Magnetisierungsrichtung sehr kleine oder negative Ausdehnungskoeffizienten. Als zusätzliche Sicherung kann der innenliegende Zylinder 9 von innen an die Permanentmagnete angelegt werden, wie es in Fig. 1 im Längsschnitt dargestellt ist.

Die Anordnung von Joch und Rotor gem. Fig. 1 stellt einen sogenannten Innenläufer dar, welcher ein sehr kleines Trägheitsmoment aufweist, aber durch die langen Polflächen und Kraftentfaltung auf beiden Seiten der Permanentmagnete ein gegenüber dem Stand der Technik hohes Drehmoment erzielt. Dieselbe Anordnung kann auch als Außenläufer ausgebildet werden mit erheblich höherem Drehmoment, aber auch Trägheitsmoment. Wenn bezogen auf einen Einbauraum das volumenspezifisch höchste Drehmoment verlangt wird, ist der Außenläufer die richtige Wahl. Wenn jedoch das drehmomentspezifische kleinste Trägheitsmoment gefordert ist, so ist der Innenläufer die beste Lösung.

Der Rotor des erfindungsgemäßen Antriebs gemäß Fig. 1 besteht somit aus zwei symmetrische magnetisch leitfähigen Glocken, die an der Innenseite der zylindrischen Mantelfläche die Permanentmagnetelemente 14 aufnehmen. Durch das Vorsehen von zwei Glocken verkürzt sich die erforderliche Länge der Permanentmagnete 14 auf die Hälfte, wodurch diese kostengünstiger herstellbar sind. Durch das Vorsehen des Innenzylinders 9 sind die Permanentmagnete zudem gegen Bruch gesichert. Optional können fensterartige Aussparungen F (Fig. 1b) vorgesehen werden, die sich über einen großen Bereich der axialen Länge der zylindrischen Mantelfläche 8a erstrecken. Diese Aussparungen haben den Sinn, die Eisenverluste in der Glocke sowie das Trägheitsmoment des Rotors zu reduzieren. Zwischen den zylindrischen Wandungen der Glocke und dem Außen- bzw. Innenstator ist jeweils ein dünner Luftspalt 7, 10.

Vorzugsweise ist der Topf 8 magnetisch leitend und die Hülse 9 unmagnetisch. Diese kann auch leitend sein mit einem unmagnetischen Topf. Dies ist notwendig, um im Rotor einen magnetischen Kurzschluss zu vermeiden.

Fig. 1c zeigt eine entsprechende dem rechteckigen Querschnitt der Magnete angepasste Aussenkontur der Glocke 8a und auch des Innenzylinders 9. Die Sicke 8f im mittleren Teil kann kleiner ausfallen, damit die Magnete einen kleinen Abstand zum Innenradius der Sicke haben, der möglichst klein sein muss. Die Magnete, die an den Sicken 8d satt anliegen haben an dieser Stelle eine kleine hier nicht gezeichnete Fase, um nicht am Innenradius der Sicke anzuliegen.

Die Fig. 2 zeigt eine weitere erfindungsgemäße Ausführungsform, wobei die beiden glockenförmigen Teile 18 mit ihren bodenförmigen Wandungen 18b aneinander liegen und insbesondere miteinander verbunden sind. Die Permanentmagnete 14 liegen innen an der zylindrischen Wandung 18a an und werden in axialer Richtung durch die nach innen gerichteten Kragen 18a sicher gehalten. Die Permanentmagnet-elemente können zur Befestigung an der zylindrischen Wandung 18a mit dieser verklebt werden. Es ist jedoch auch möglich, durch entsprechende Einkerbungen in der zylindrischen Wandung 18a einen Formschluß zwischen Permanentmagnetelementen 14 und zylindrischer Wandung 18 zu erzielen. Im Gegensatz zur Ausführungsform der Fig. 1 tragen sowohl die Außen- als auch die Innenstatoren Erregerspulen 12, 15. Die in Fig. 1 beschriebene Hülse wird hier nicht verwendet. Der konstruktive Aufbau ermöglicht kleine Luftspalte 7 und 10 zwischen den Magneten und den Statoren.

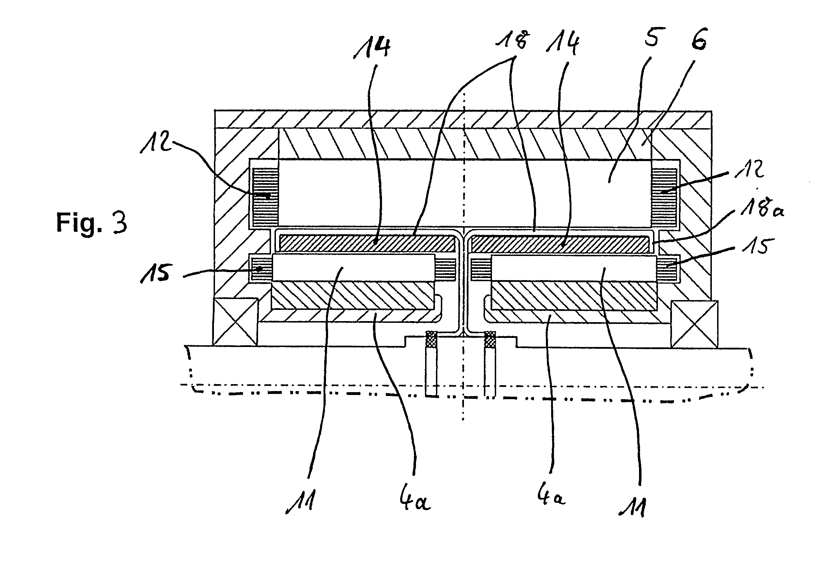

Die Ausführungsform gemäß der Fig. 3 unterscheidet sich von der Ausführungsform gemäß der Fig. 2 lediglich dadurch, dass die Erregerspulen 12 am Außenstator größer sind als die Erregerspulen 15 des Innenstators, welche vom Innenstator 11 getragen werden. Durch ein entsprechende Ausgestaltung, wie sie in Fig. 3 dargestellt ist, ergeben sich geringere thermische Probleme als bei der Ausführungsform gemäß der Fig. 2.

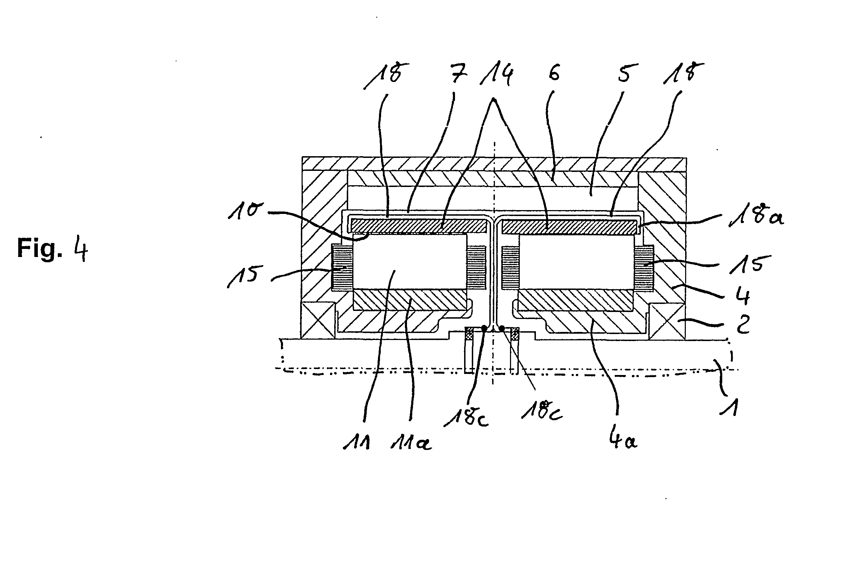

Die Ausführungsform gemäß der Fig. 4 ist als Außenläufer ausgebildet, wobei der prinzipielle Aufbau der der Ausführungsform gemäß der Fig, 3 entspricht.

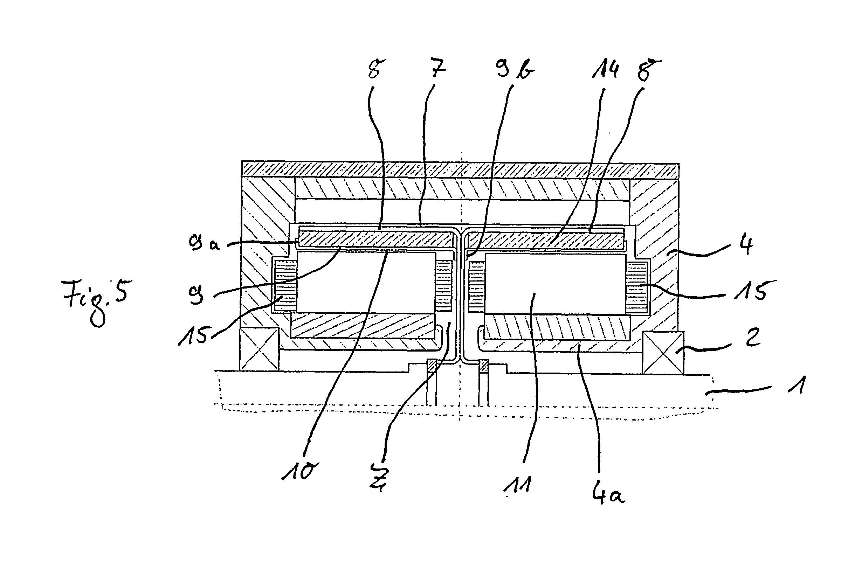

Die Fig. 5 ist ebenfalls als Außenläufer ausgestaltet, wobei zur zusätzlichen Sicherung und Kapselung der Permanentmagnete 14 ein Innenzylinder 9 vorgesehen ist.

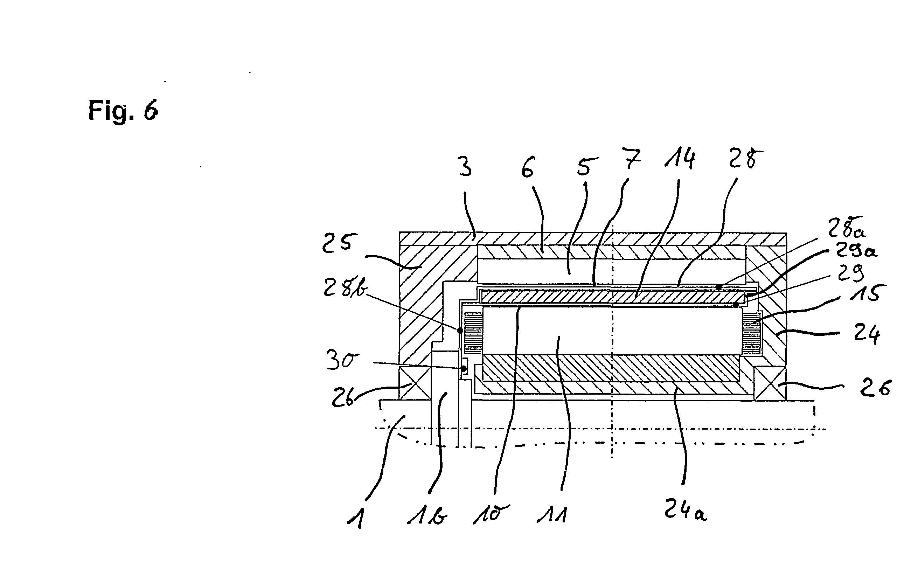

Die Fig. 6 zeigt eine weitere erfindungsgemäße Ausführungsform, mit lediglich einer Glocke 28, die mit ihrer Bodenwandung 28b durch Befestigungsmittel 30 an dem Bereich 1b der Welle 1 drehsicher befestigt ist. Die Glocke 28 umgreift mit ihrer gesamten axialen Länge den Innenstator 11, welcher die Erregerwicklung 15 trägt. Der Innenstator 11 ist auf einer zylindrischen Wandung 24a des rechten Gehäuseteils 24 gelagert. Das Gehäuse selbst ist durch die zylindrische Mantelfläche 3 und das weitere Gehäuseteil 25 verschlossen, wobei die Welle 1 über Lager 26 drehbar im Gehäuse gelagert ist. Die Glocke 28 weist eine äußere zylindrische Wandung 28a auf, an der innenliegend die Permanentmagnete 14 anliegen. Von innen werden die Permanentmagnete über ein Hülse 29 gehalten, die an der äußeren zylindrischen Wandung 28a mittels ihres Kragens 29a befestigt ist. Zusätzlich kann sie mit ihrer im Bereich des Topfbodens angeordneten Seite mit der zylindrischen Wandung 28a oder der Bodenwandung 28b verbunden werden. Durch eine nicht gezeichnete Lagerstelle für die Welle im Ghäuse 24a, kann das Gehäuse 25 auf dieser Seite geschlossen ausgebildet werden.

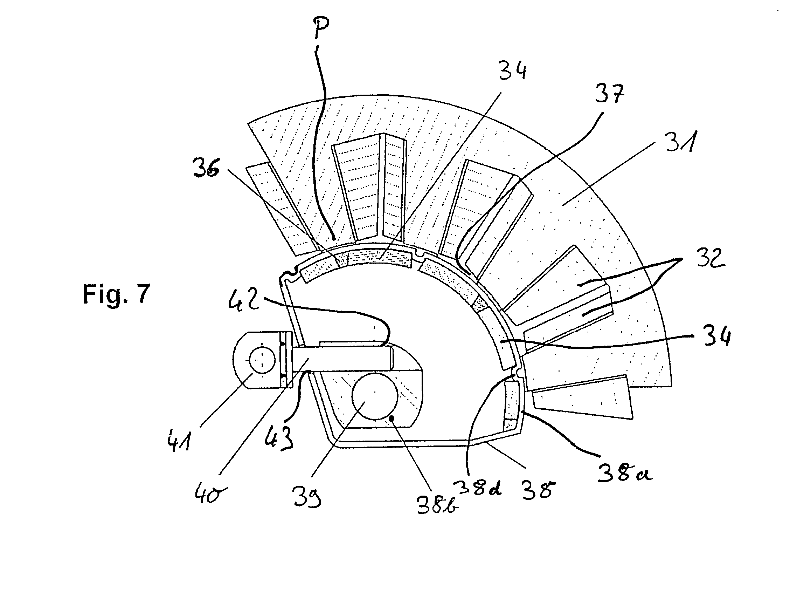

Fig. 7 zeigt eine weitere mögliche Ausgestaltung des erfindungsgemäßen Antriebs, wobei dieser als Segmentmotor ausgebildet ist. Der Segmentmotor weist ein asymmetrische Glocke 38 auf. Die Magnete 34 sind innerhalb der Glocke angeordnet und stützen sich in Umfangsrichtung an den Sicken 13 ab, wobei den benachbarten Permanentmagneten 34 Temperaturausgleichselemente 36 angeordnet sind. Der Außenstator 31 trägt die Erregerspule 32. Auf die Darstellung des Innenstators wurde verzichtet. Er ist ähnlich wie die Innenstatoren der vorbeschriebenen Ausführungsformen ausgestaltet. Der Innenstator ist hier nicht dargestellt. Die Glocke 38 ist an der Welle 39 über ihre Bodenwandung 38b, welche lediglich ausschnittsweise dargestellt ist, befestigt. Die Kraftübertragung vom zylindrischen Mantel 38a auf die Welle kann entweder am Wellenende oder innerhalb der Glocke erfolgen. Zudem ist es möglich, zwei mit ihren Bodenseiten zueinander zugewandten Glocken auch für den Segmentmotor zu verwenden. Die Kraftübertragung von der Welle auf ein zu stellendes Glied kann über einen Stift 40 erfolgen, der in einen Mitnehmer 42 eingepresst ist, und seine Kraft auf ein Koppelglied 19 überträgt. Die Glocke 38 hat hierfür eine entsprechende Aussparung 43.

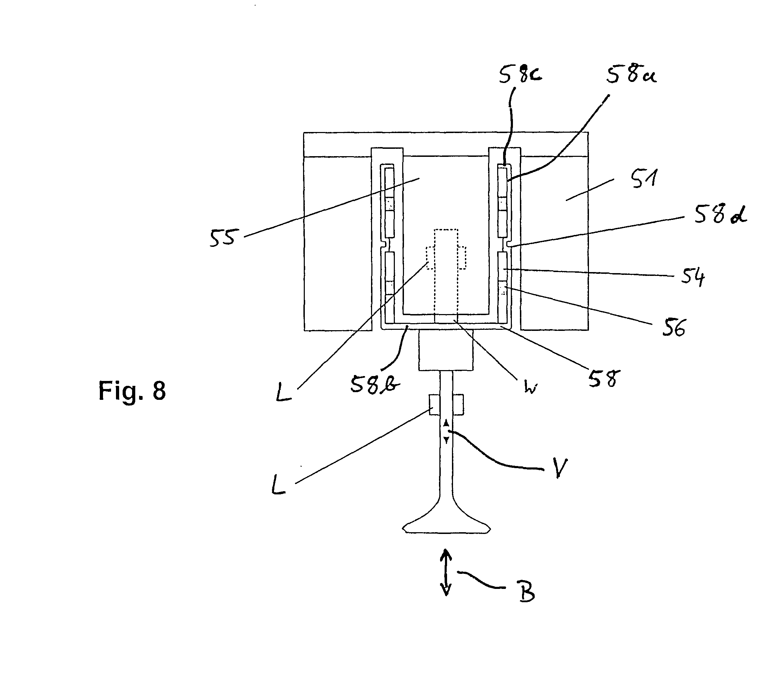

Die Fig. 8 zeigt eine weitere Ausführungsform eines erfindungsgemäßen Antriebs als Linearantrieb. Das Magnetsystem im Innenstator 55 und Außenstator 51 ist aus Gründen der Übersichtlichkeit nicht detailliert dargestellt. Die Magnete 54 sind in der Glocke 58 angeordnet, wobei sie durch Temperaturausgleichselemente 56 voneinander beabstandet sind und durch Sicken 58d in der Glocke sowie dem nach innen gerichteten Kragen 58c in Position gehalten sind. Die zylindrische Wandung 58a ist über die Bodenwandung 58b mit der Welle W in Verbindung. Zwischen der zylindrischen Außenfläche der zylindrischen Wandung 58a und dem Außenstator 51 ist ein Luftspalt, Ebenfalls ist ein Luftspalt zwischen dem Innenstator 55 und den Permanentmagnetelementen 54. Der magnetische Fluß durchdringt die zylindrische Wandung 58a sowie beide Luftspalte und bildet zusammen mit den Permanentmagnetelementen 54 sowie beider Statoren mehrere Magnetkreise. Die Glocke kann rund, oval oder auch als Rechteck oder Kastenprofil ausgebildet sein. Sie ist vorzugsweise aus magnetisch leitendem Material und über die beiden Lager L und über die Welle W in axialer Richtung verschieblich gelagert. An der welle W kann zum Beispiel ein Ventil V eines Verbrennungsmotors befestigt sein, welches durch den sich auf- und ab bewegenden Rotor periodisch öffnet bzw. schließt.

## Patentansprüche

1. Elektrische Drehfeldmaschine mit feststehendem Außen- und Innenstator (5,6; 11,11a) und einem drehbar gelagerten Rotor, wobei mehrere am Rotor angeordnete Permanentmagnetelemente (14, 34, 54) zur Erzeugung eines Erregerflusses und zumindest eine elektrische Erregerspule (12, 15, 32) vorgesehen sind, wobei der Rotor mindestens ein topfförmiges Teil (8, 28, 38, 58) hat, welches eine zylindrische Wandung (8a, 28a, 38a, 58a) sowie eine Bodenwandung (8b, 28b, 38b, 58b) aufweist, wobei die Bodenwandung (8b, 28b, 38b, 58b) senkrecht und die zylindrische Wandung (8a, 28a, 38a, 58a) koaxial zur Achse der Rotorwelle (1, 39, W) angeordnet ist und die Bodenwandung (8b, 28b, 38b, 58b) zur Übertragung eines Drehmomente mit der Rotorwelle (1, 39, W) verbunden ist, wobei die radiale Dicke der Permanentmagnetelemente (14) größer ist als die Dicke der zylindrischen Wandung (8a, 28a, 38a, 58a) und die Permanentmagnetelemente (14) in Umfangsrichtung nebeneinander am Rotor des Antriebs befestigt sind, wobei die Permanentmagnetelemente (14, 34, 54) zusammen mit dem Außen- und Innenstator (5,6; 11,11a) den zylindrischen Teil des Rotors radial vollständig durchgreifende Magnetkreise bilden, **dadurch gekennzeichnet, dass** die zylindrische Wandung (8a, 28a, 38a, 58a) aus einem magnetischen Werkstoff ist und nur innen an der zylindrischen Wandung Permanentmagnetelemente (14, 34, 54) angeordnet sind.

2. Elektrische Drehfeldmaschine nach Anspruch 1, **dadurch gekennzeichnet, dass** die Permanentmagnetelemente (14, 34, 54) in axialer Richtung parallel zur zylindrischen wandung angeordnet sind.

3. Elektrische Drehfeldmaschine nach Anspruch 1 oder 2, **dadurch gekennzeichnet, dass** die zylindrische Wandung (8a, 28a, 38a, 58a) axial verlaufende und radial nach innen gerichtete Einkerbungen oder Sicken (8d, 38d, 58d) aufweist, zwischen an denen die Permanentmagnetelemente (14, 34, 54) abgestützt sind oder anliegen.

4. Elektrische Drehfeldmaschine nach Anspruch 1, **dadurch gekennzeichnet, dass** der Zwischenraum zwischen den Einkerbungen bzw. Sicken (8f, 36, 56) und den Permanentmagnetelementen (14, 34, 54) mit einem Füllstoff (16, 36, 56) ausgefüllt ist.

5. Elektrische Drehfeldmaschine nach einem der vorhergehenden Ansprüche, **dadurch gekennzeichnet, dass** die zylindrische Wandung (8a, 28a, 38a, 58a) mit der Bodenwandung (8b, 28b, 38b, 58b) einstückig ist.

6. Elektrische Drehfeldmaschine nach einem der Ansprüche 1 bis 4, **dadurch gekennzeichnet, dass** die zylindrische Wandung (8a, 28a, 38a, 58a) an der Bodenwandung (8b, 28b, 38b, 58b) befestigt ist.

7. Elektrische Drehfeldmaschine nach einem der vorhergehenden Anspruche, **dadurch gekennzeichnet, dass** die zylindrische Wandung (8a, 28a, 38a, 58a) im Bereich der Sicken fensterartige Aussparungen zur Gewichtseinsparung oder zum Zuführen des Füllmaterials aufweist.

8. Elektrische Drehfeldmaschine nach einem der vorhergehenden Ansprüche, **dadurch gekennzeichnet, dass** die Permanentmagnetelemente (14, 34, 54) radial zwischen zwei zylindrischen Wandungen einliegen.

9. Elektrische Drehfeldmaschine nach Anspruch 8, **dadurch gekennzeichnet, dass** die radial innenliegende zylindrische wandung (9, 29) mit der Bodenwandung verbunden, insbesondere verschweißt oder verklebt ist.

10. Elektrische Drehfeldmaschine nach einem der Ansprüche 1 bis 8, **dadurch gekennzeichnet, dass** die Permanentmagnetelemente (14, 34, 54) radial zwischen den zylindrischen Wandungen zweier ineinander liegenden topfförmigen Teile angeordnet sind und mindestens eines der beiden topfförmigen Teile drehfest mit der Welle verbunden ist.

11. Elektrische Drehfeldmaschine nach Anspruch 10, **dadurch gekennzeichnet, dass** die radial innenliegende zylindrische Wandung mit einer eigenen Bodenwandung das zweite topfförmige Teil bildet, welches innerhalb des äußeren topfförmigen Teils angeordnet ist.

12. Elektrische Drehfeldmaschine nach Anspruch 11, **dadurch gekennzeichnet, dass** die beiden Bodenwandungen der topfförmigen Teile miteinander verbunden sind.

13. Elektrische Drehfeldmaschine nach einem der vorhergehenden Ansprüche, **dadurch gekennzeichnet, dass** die Drehfeldmaschine zwei zylindrische Wandungen (8a) aufweist, die axial nebeneinander angeordnet sind und an denen innenliegend Permanentmagnetelemente (14) angeordnet sind, wobei zwischen den zylindrischen Wandungen (8a) mindestens eine Bodenwandung (8b) angeordnet ist.

14. Elektrische Drehfeldmaschine nach Anspruch 13, **dadurch gekennzeichnet, dass** jede zylindrische Wandung (8a) mit einer jeweils zugehörigen Bodenwandung (8b) ein topfförmiges Teil (8) bildet.

15. Elektrische Drehfeldmaschine nach Anspruch 14, **dadurch gekennzeichnet, dass** die beiden Bodenwandungen (8b) aneinander anliegen und insbesondere miteinander verbunden sind.

16. Elektrische Drehfeldmaschine nach Anspruch 13, **dadurch gekennzeichnet, dass** die zylindrischen Wandungen an der einen Bodenwandung befestigt sind oder das zumindest eine zylindrische Wandung mit der Bodenwandung einstückig ausgebildet ist und die andere zylindrische Wandung mit der Bodenwandung verbunden ist.

17. Elektrische Drehfeldmaschine nach einem der vorhergehenden Ansprüche, **dadurch gekennzeichnet, dass** die Welle die mindestens eine Bodenwandung durchgreift und die Bodenwandung insbesondere formschlüssig an der Welle befestigt ist.

18. Elektrische Drehfeldmaschine nach einem der vorhergehenden Ansprüche, **dadurch gekennzeichnet, dass** innerhalb des topfförmigen Rotors ein Innenstator angeordnet ist, wobei der Außenstator und/oder der Innenstator mindestens eine Erregerwicklung trägt.

19. Elektrische Drehfeldmaschine nach einem der vorhergehenden Ansprüche, **dadurch gekennzeichnet, dass** mehrere Permanentmagnetelemente aufweisende topfförmige Teile axial nebeneinander auf einer Welle angeordnet sind.

20. Elektrische Drehfeldmaschine nach Anspruch 19, **dadurch gekennzeichnet, dass** mindestens ein Außenstator und Innenstator den mehreren topfförmigen Teilen zugeordnet sind.

21. Elektrische Drehfeldmaschine nach einem der vorhergehenden Ansprüche, **dadurch gekennzeichnet, dass** die Drehfeldmaschine als Segmentmotor ausgebildet ist, wobei das topfförmige Teil lediglich ein Segment eines vollständigen Topfes ist.

22. Elektrische Drehfeldmaschine nach einem der vorhergehenden Ansprüche, **dadurch gekennzeichnet, dass** die magnetische Kraft den Rotor um seine Achse verschwenkt oder verdreht.

23. Elektrische Drehfeldmaschine nach einem der vorhergehenden Ansprüche 1 bis 21, **dadurch gekennzeichnet, dass** die magnetische Kraft den Rotor in axialer Richtung der Rotorachse linear hin und her verstellt.

24. Elektrische Drehfeldmaschine nach einem der vorhergehenden Ansprüche, **dadurch gekennzeichnet, dass** die mindestens eine an den Permanentmagnetelementen anliegende zylindrische Wandung magnetisch leitend ist, vorzugsweise die äussere zylindrische Wandung

25. Elektrische Drehfeldmaschine nach einem der vorhergehenden Ansprüche, **dadurch gekennzeichnet, dass** nur eine zylindrische Wand verwendet wird.

26. Elektrische Drehfeldmaschine nach einem der vorhergehenden Ansprüche, **dadurch gekennzeichnet, dass** die Bodenwandung eine andere Dicke als die zylindrische Wandung des topfförmigen Teils aufweist, wobei insbesondere die Bodenwandung dicker als die zylindrische Wandung ist.

27. Elektrische Drehfeldmaschine nach einem der vorhergehenden Ansprüche, **dadurch gekennzeichnet, dass** die Bodenwandung mehrteilig, insbesondere zweiteilig ausgebildet ist.

28. Elektrische Drehfeldmaschine nach einem der vorhergehenden Ansprüche, **dadurch gekennzeichnet, dass** die Permanentmagnetelemente (14') im Querschnitt quaderförmig sind.

29. Elektrische Drehfeldmaschine nach einem der vorhergehenden Ansprüche, **dadurch gekennzeichnet, dass** ein nichtmagnetischer Ring (8g) stirnseitig an der Glocke (8) angeordnet ist.

30. Elektrische Drehfeldmaschine nach Anspruch 29, **dadurah gekennzeichnet**, dass der Ring (8g) in ein Zwischenräume der Glocke füllendes Gießharz eingebettet ist oder stirnseitig mit mindestens einer zylindrischen Wandung verklebt oder verschweißt ist.

## Claims

1. Electrical rotary field machine having a fixed outer and fixed inner stator (5, 6; 11, 11a) and a rotatably supported rotor, there being provided a plurality of permanent magnet elements (14, 34, 54) which are arranged on the rotor in order to produce an exciter flux and at least one electric exciter coil (12, 15, 32), the rotor having at least one pot-like portion (8, 28, 38, 58) which has a cylindrical wall (8a, 28a, 38a, 58a) and a base wall (8b, 28b, 38b, 58b), the base wall (8b, 28b, 38b, 58b) being arranged perpendicularly and the cylindrical wall (8a, 28a, 38a, 58a) being arranged coaxially relative to the axis of the rotor shaft (1, 39, W) and the base wall (8b, 28b, 38b, 58b) being connected to the rotor shaft (1, 39, W) in order to transmit a torque, the radial thickness of the permanent magnet elements (14) being greater than the thickness of the cylindrical wall (8a, 28a, 38a, 58a) and the permanent magnet elements (14) being secured beside each other in a peripheral direction to the rotor of the drive, the permanent magnet elements (14, 34, 54) forming together with the outer and inner stator (5, 6; 11, 11a) magnetic circuits which extend radially completely through the cylindrical portion of the rotor, **characterised in that** the cylindrical wall (8a, 28a, 38a, 58a) is produced from a magnetic material and permanent magnet elements (14, 34, 54) are arranged only internally on the cylindrical wall.

2. Electrical rotary field machine according to claim 1, **characterised in that** the permanent magnet elements (14, 34, 54) are arranged in an axial direction parallel with the cylindrical wall.

3. Electrical rotary field machine according to claim 1 or claim 2, **characterised in that** the cylindrical wall (8a, 28a, 38a, 58a) has axially extending and radially inwardly directed recesses or beads (8d, 38d, 58d) between which the permanent magnet elements (14, 34, 54) are supported or in abutment.

4. Electrical rotary field machine according to claim 1, **characterised in that** the intermediate space between the recesses or beads (8f, 36, 56) and the permanent magnet elements (14, 34, 54) is filled with a filler material (16, 36, 56).

5. Electrical rotary field machine according to any one of the preceding claims, **characterised in that** the cylindrical wall (8a, 28a, 38a, 58a) is integral with the base wall (8b, 28b, 38b, 58b).

6. Electrical rotary field machine according to any one of claims 1 to 4, **characterised in that** the cylindrical wall (8a, 28a, 38a, 58a) is secured to the base wall (8b, 28b, 38b, 58b).

7. Electrical rotary field machine according to any one of the preceding claims, **characterised in that** the cylindrical wall (8a, 28a, 38a, 58a) has, in the region of the beads, window-like recesses for saving weight or for supplying the filler material.

8. Electrical rotary field machine according to any one of the preceding claims, **characterised in that** the permanent magnet elements (14, 34, 54) are enclosed radially between two cylindrical walls.

9. Electrical rotary field machine according to claim 8, **characterised in that** the radially inner cylindrical wall (9, 29) is connected to the base wall, in particular welded or adhesively bonded.

10. Electrical rotary field machine according to any one of claims 1 to 8, **characterised in that** the permanent magnet elements (14, 34, 54) are arranged radially between the cylindrical walls of two pot-like portions which are located one inside the other, and at least one of the two pot-like portions is connected to the shaft in a rotationally secure manner.

11. Electrical rotary field machine according to claim 10, **characterised in that** the radially inner cylindrical wall forms with a separate base wall the second pot-like portion which is arranged inside the outer pot-like portion.

12. Electrical rotary field machine according to claim 11, **characterised in that** the two base walls of the pot-like portions are connected to each other.

13. Electrical rotary field machine according to any one of the preceding claims, **characterised in that** the rotary field machine has two cylindrical walls (8a) which are arranged axially one beside the other and on which permanent magnet elements (14) are arranged internally, at least one base wall (8b) being arranged between the cylindrical walls (8a).

14. Electrical rotary field machine according to claim 13, **characterised in that** each cylindrical wall (8a) forms a pot-like portion (8) with a respective associated base wall (8b).

15. Electrical rotary field machine according to claim 14, **characterised in that** the two base walls (8b) are in abutment against each other and are in particular connected to each other.

16. Electrical rotary field machine according to claim 13, **characterised in that** the cylindrical walls are secured to the one base wall or the at least one cylindrical wall is constructed integrally with the base wall and the other cylindrical wall is connected to the base wall.

17. Electrical rotary field machine according to any one of the preceding claims, **characterised in that** the shaft extends through the at least one base wall and the base wall is secured to the shaft, in particular in a positive-locking manner.

18. Electrical rotary field machine according to any one of the preceding claims, **characterised in that** an inner stator is arranged inside the pot-like rotor, the outer stator and/or the inner stator carrying at least one exciter coil.

19. Electrical rotary field machine according to any one of the preceding claims, **characterised in that** a plurality of pot-like elements which have permanent magnet elements are arranged axially one beside the other on a shaft.

20. Electrical rotary field machine according to claim 19, **characterised in that** at least one outer stator and inner stator are associated with the plurality of pot-like portions.

21. Electrical rotary field machine according to any one of the preceding claims, **characterised in that** the rotary field machine is constructed as a segment motor, the pot-like portion being only a segment of a complete pot.

22. Electrical rotary field machine according to any one of the preceding claims, **characterised in that** the magnetic force pivots or rotates the rotor about the axis thereof.

23. Electrical rotary field machine according to any one of the preceding claims 1 to 21, **characterised in that** the magnetic force moves the rotor back and forth in a linear manner in an axial direction of the rotor axis.

24. Electrical rotary field machine according to any one of the preceding claims, **characterised in that** the at least one cylindrical wall which is in abutment against the permanent magnet elements is magnetically conductive, preferably the outer cylindrical wall.

25. Electrical rotary field machine according to any one of the preceding claims, **characterised in that** only one cylindrical wall is used.

26. Electrical rotary field machine according to any one of the preceding claims, **characterised in that** the base wall has a different thickness to the cylindrical wall of the pot-like portion, the base wall in particular being thicker than the cylindrical wall.

27. Electrical rotary field machine according to any one of the preceding claims, **characterised in that** the base wall is constructed in several parts, in particular in two parts.

28. Electrical rotary field machine according to any one of the preceding claims, **characterised in that** the permanent magnet elements (14') are parallelepipedal in cross-section.

29. Electrical rotary field machine according to any one of the preceding claims, **characterised in that** a non-magnetic ring (8g) is arranged at the end face on the bell (8).

30. Electrical rotary field machine according to claim 29, **characterised in that** the ring (8g) is embedded in a cast resin which fills intermediate spaces of the bell or is adhesively bonded or welded to at least one cylindrical wall at the end face.

## Revendications

1. Machine électrique à champ tournant ou à induction, comprenant un stator extérieur et intérieur (5, 6; 11, 11a), fixe, et un rotor monté rotatif, machine dans laquelle sont prévus plusieurs éléments d'aimant permanent (14, 34, 54) agencés sur le rotor pour engendrer un flux d'excitation, et au moins une bobine d'excitation électrique (12, 15, 32),
dans laquelle le rotor possède au moins une partie en forme de pot (8, 28, 38, 58), qui présente une paroi cylindrique (8a, 28a, 38a, 58a) ainsi qu'une paroi de fond (8b, 28b, 38b, 58b),
dans laquelle la paroi de fond (8b, 28b, 38b, 58b) est agencée perpendiculairement, et la paroi cylindrique (8a, 28a, 38a, 58a) coaxialement par rapport à l'axe de l'arbre de rotor (1, 39, W), et la paroi de fond (8b, 28b, 38b, 58b) est reliée à l'arbre de rotor (1, 39, W) pour la transmission d'un couple de rotation,
dans laquelle l'épaisseur radiale des éléments d'aimant permanent (14) est plus grande que l'épaisseur de la paroi cylindrique (8a, 28a, 38a, 58a), et les éléments d'aimant permanent (14) sont fixés côte à côte dans la direction périphérique, sur le rotor de l'entraînement, dans laquelle les éléments d'aimant permanent (14, 34, 54) forment en commun avec le stator extérieur et intérieur (5, 6; 11, 11a) des circuits magnétiques, qui traversent radialement en totalité la partie cylindrique du rotor,
**caractérisée en ce que** la paroi cylindrique (8a, 28a, 38a, 58a) est réalisée en un matériau magnétique, et des éléments d'aimant permanent (14, 34, 54) ne sont agencés qu'à l'intérieur sur la paroi cylindrique.

2. Machine électrique à champ tournant selon la revendication 1, **caractérisée en ce que** les éléments d'aimant permanent (14, 34, 54) sont agencés, dans la direction axiale, parallèlement à la paroi cylindrique.

3. Machine électrique à champ tournant selon la revendication 1 ou la revendication 2, **caractérisée en ce que** la paroi cylindrique (8a, 28a, 38a, 58a) présente des encoches ou moulures (8d, 38d, 58d) d'étendue axiale et dirigées radialement vers l'intérieur, entre lesquelles s'appuient ou contre lesquelles s'appliquent les éléments d'aimant permanent (14, 34, 54).

4. Machine électrique à champ tournant selon la revendication 1, **caractérisée en ce que** l'espace intermédiaire entre les encoches respectivement les moulures (8f, 36, 56) et les éléments d'aimant permanent (14, 34, 54), est rempli d'un matériau de remplissage (16, 36, 56).

5. Machine électrique à champ tournant selon l'une des revendications précédentes, **caractérisée en ce que** la paroi cylindrique (8a, 28a, 38a, 58a) est réalisée d'un seul tenant avec la paroi de fond (8b, 28b, 38b, 58b).

6. Machine électrique à champ tournant selon l'une des revendications 1 à 4, **caractérisée en ce que** la paroi cylindrique (8a, 28a, 38a, 58a) est fixée à la paroi de fond (8b, 28b, 38b, 58b).

7. Machine électrique à champ tournant selon l'une des revendications précédentes, **caractérisée en ce que** la paroi cylindrique (8a, 28a, 38a, 58a) présente, dans la zone des moulures, des évidements en forme de fenêtre, pour réaliser un gain de poids ou pour l'amenée du matériau de remplissage.

8. Machine électrique à champ tournant selon l'une des revendications précédentes, **caractérisée en ce que** les éléments d'aimant permanent (14, 34, 54) sont placés radialement entre deux parois cylindriques.

9. Machine électrique à champ tournant selon la revendication 8, **caractérisée en ce que** la paroi cylindrique (9, 29) située radialement à l'intérieur, est reliée à la paroi de fond, et est notamment soudée ou collée à cette dernière.

10. Machine électrique à champ tournant selon l'une des revendications 1 à 8, **caractérisée en ce que** les éléments d'aimant permanent (14, 34, 54) sont agencés radialement entre les parois cylindriques de deux parties en forme de pot placées l'une dans l'autre, et au moins l'une des deux parties en forme de pot est reliée de manière fixe en rotation à l'arbre.

11. Machine électrique à champ tournant selon la revendication 10, **caractérisée en ce que** la paroi cylindrique située radialement à l'intérieur forme avec une paroi de fond, qui lui est propre, la deuxième partie en forme de pot, qui est agencée à l'intérieur de la partie en forme pot extérieure.

12. Machine électrique à champ tournant selon la revendication 11, **caractérisée en ce que** les deux parois de fond des parties en forme de pot, sont reliées l'une à l'autre.

13. Machine électrique à champ tournant selon l'une des revendications précédentes, **caractérisée en ce que** la machine à champ tournant présente deux parois cylindriques (8a), qui sont agencées axialement côte à côte et sur lesquelles sont agencés, du côté intérieur, des éléments d'aimant permanent (14), au moins une paroi de fond (8b) étant agencée entre les parois cylindriques (8a).

14. Machine électrique à champ tournant selon la revendication 13, **caractérisée en ce que** chaque paroi cylindrique (8a) forme, avec une paroi de fond (8b) respectivement associée, une partie en forme de pot (8).

15. Machine électrique à champ tournant selon la revendication 14, **caractérisée en ce que** les deux parois de fond (8b) s'appuient l'une contre l'autre et sont notamment reliées l'une à l'autre.

16. Machine électrique à champ tournant selon la revendication 13, **caractérisée en ce que** les parois cylindriques sont fixées à ladite une paroi de fond, ou en ce qu'au moins une paroi cylindrique est réalisée d'un seul tenant avec la paroi de fond, et l'autre paroi cylindrique est reliée à la paroi de fond.

17. Machine électrique à champ tournant selon l'une des revendications précédentes, **caractérisée en ce que** l'arbre traverse ladite au moins une paroi de fond, et la paroi de fond est fixée à l'arbre, notamment par une liaison par complémentarité de formes.

18. Machine électrique à champ tournant selon l'une des revendications précédentes, **caractérisée en ce qu'**à l'intérieur du rotor en forme de pot est agencé un stator intérieur, le stator extérieur et/ou le stator intérieur portant au moins une bobine d'excitation.

19. Machine électrique à champ tournant selon l'une des revendications précédentes, **caractérisée en ce que** plusieurs parties en forme de pot présentant des éléments d'aimant permanent, sont agencées axialement côte à côte sur un arbre.

20. Machine électrique à champ tournant selon la revendication 19, **caractérisée en ce qu'**au moins un stator extérieur et un stator intérieur sont associés aux dites plusieurs parties en forme de pot.

21. Machine électrique à champ tournant selon l'une des revendications précédentes, **caractérisée en ce que** la machine à champ tournant est réalisée en tant que moteur segmenté, la partie en forme de pot étant uniquement un segment d'un pot complet.

22. Machine électrique à champ tournant selon l'une des revendications précédentes, **caractérisée en ce que** la force magnétique fait pivoter ou tourner le rotor autour de son axe.

23. Machine électrique à champ tournant selon l'une des revendications précédentes 1 à 21, **caractérisée en ce que** la force magnétique déplace le rotor linéairement en va et vient dans la direction axiale de l'axe de rotor.

24. Machine électrique à champ tournant selon l'une des revendications précédentes, **caractérisée en ce que** ladite au moins une paroi cylindrique appliquée contre les éléments d'aimant permanent est conductrice sur le plan magnétique, de préférence la paroi cylindrique extérieure.

25. Machine électrique à champ tournant selon l'une des revendications précédentes, **caractérisée en ce que** l'on utilise qu'une seule paroi cylindrique.

26. Machine électrique à champ tournant selon l'une des revendications précédentes, **caractérisée en ce que** la paroi de fond présente une autre épaisseur que la paroi cylindrique de la partie en forme de pot, la paroi de fond étant notamment plus épaisse que la paroi cylindrique.

27. Machine électrique à champ tournant selon l'une des revendications précédentes, **caractérisée en ce que** la paroi de fond est réalisée en plusieurs parties, notamment en deux parties.

28. Machine électrique à champ tournant selon l'une des revendications précédentes, **caractérisée en ce que** les éléments d'aimant permanent (14') sont de forme rectangulaire en section transversale, à savoir parallélépipédiques.

29. Machine électrique à champ tournant selon l'une des revendications précédentes, **caractérisée en ce qu'**un anneau (8g) non magnétique est agencé frontalement sur la cloche (8).

30. Machine électrique à champ tournant selon la revendication 29, **caractérisée en ce que** l'anneau (8g) est noyé dans une résine de moulage remplissant des espaces intermédiaires de la cloche, ou est collé ou soudé frontalement à au moins une paroi cylindrique.
